# EUROPÄISCHE PATENTSCHRIFT

(11) **EP 0 815 631 B1**
(45) Veröffentlichungstag und Bekanntmachung des Hinweises auf die Patenterteilung: **07.01.1999**
(21) Anmeldenummer: 96904848.7
(22) Anmeldetag: 22.02.1996
(51) Int. Cl.: H02H 7/085

(54) **VERFAHREN ZUR ÜBERWACHUNG UND STEUERUNG DES ÖFFNUNGS- UND SCHLIESSVORGANGS VON ELEKTRISCH BETRIEBENEN AGGREGATEN**
METHOD FOR MONITORING AND CONTROLLING THE OPENING AND CLOSING PROCESS OF ELECTRICALLY POWERED UNITS
PROCEDE DE SURVEILLANCE ET DE COMMANDE DU PROCESSUS D'OUVERTURE ET DE FERMETURE D'UNITES ACTIONNEES ELECTRIQUEMENT

(30) Priorität: 01.03.1995 DE 19507137
(43) Veröffentlichungstag der Anmeldung: 07.01.1998
(73) Patentinhaber: Leopold Kostal GmbH & Co. KG, 58507 Lüdenscheid (DE)
(72) Erfinder: BERGMANN, Eduard, D-58515 Lüdenscheid (DE); HÖRST, Norbert, D-44227 Dortmund (DE); PRETZLAFF, Volker, D-58638 Iserlohn (DE)
(86) Internationale Anmeldenummer: EP9600738
(87) Internationale Veröffentlichungsnummer: WO9627229

(56) Entgegenhaltungen:
- DE-A- 3 136 746
- DE-A- 3 736 400

## Beschreibung

Die vorliegende Erfindung geht von einem entsprechend dem Oberbegriff des Hauptanspruches konzipierten Verfahren aus.

Solche Verfahren sind insbesondere dafür vorgesehen, um beim Schließvorgang des in einem Kraftfahrzeug vorhandenen, elektrisch betriebenen Aggregates eine übermäßige Gefährdung von im Bereich dieses Aggregates befindlichen Personen durch das Einklemmen von Körperteilen zu vermeiden.

Durch die DE 31 36 746 C2 ist ein Verfahren bekanntgeworden, wobei eine dem Aggregat zugeordnete Steuerelektronik einerseits über Bedienelemente und andererseits über eine Sensoreinrichtung beeinflußbar ist. Dabei werden laufend von der Sensoreinrichtung, u.a. von der Drehzahl oder der Öffnungs- bzw. Schließgeschwindigkeit des verstellbaren Aggregatteiles bzw. des zugehörigen Stellmotors abhängige Meßwerte der Steuerelektronik übermittelt, die einer bereichsbezogenen Bewertung unterzogen werden.

Im einzelnen bedeutet dies, daß in einem ersten Bereich, der von einem völlig geöffneten bis zu einem etwa halb geöffneten Zustand des Aggregates geht, keine Überwachung stattfindet. In einem zweiten Bereich, der von dem etwa halb geöffneten bis zu einem fast vollständig geschlossenem Zustand des Aggregates geht, wird dann die auf die vorerwähnten Sicherheitsaspekte ausgerichtete Überwachung durchgeführt. Dieser Bereich könnte natürlich ohne Mehraufwand um den ersten Bereich erweitert werden und zwar wenn auch für den ersten Bereich die Sicherheit verlangt wird.
In einem dritten (recht kleinen) Bereich, der von dem fast vollständig geschlossenen bis zu dem vollständig geschlossenen Zustand des Aggregates geht und dem Einlauf des zu verstellenden Aggregateteiles in die dort vorgesehene Dichtungsanordnung zugeordnet ist, wird wiederum keine Überwachung vorgenommen, und zwar weil in diesem Bereich keine Gefährdung von Körperteilen mehr auftreten kann. Bei einem derart konzipierten Aggregat besteht das Problem, daß der Stellmotor bzgl. seiner Leistung so ausgelegt sein muß, daß die über den gesamten Verstellbereich sich ergebenden, z.B. durch konstruktive Gestaltung des Aggregates oder durch äußere Einflüsse bedingten mechanischen Widerstände überwindbar sind. In der Konsequenz bedeutet dies, daß der Stellmotor leistungsmäßig deutlich größer ausgelegt sein muß, als es für den über den weitaus größten Teil des Verstellweges erforderlichen Bedarf notwendig ist. Dadurch besteht dann aber wieder die Problematik, daß von dem zu verstellenden Aggregateteil ein Körperteil mit einer unverhältnismäßig hohen Kraft/Weg-Rate eingeklemmt werden kann.

Durch die DE 37 28 008 A1 ist es weiterhin bekannt, die Drehzahl des Stellmotors und damit die Geschwindigkeit von zum Schließen und Freigeben von öffnungen vorgesehenen, über eine Betätigungseinrichtung beeinflussbaren bewegbaren Teilen zu verändern.

Ein Hinweis auf eine positionsbezogene Beeinflussung der Drehzahl zwecks Begrenzung der im Einklemmfall ausgeübten Kraft ist daraus jedoch nicht ableitbar. Vielmehr wird im gegenteil darauf hingewiesen, das Drehmoment, d.h. die Kraft auch bei reduzierter Drehzahl beizubehalten.

Schließlich ist durch die DE 37 36 400 A1 eine Sicherheitsvorrichtung bekanntgeworden, bei der die im Oberbegriff des Hauptanspruches angegebenen Merkmale zum Ausdruck kommen.
Problematisch bei einer solchen Ausführung ist, daß der Sicherheitsbereich nicht in zwei Bereiche unterteilt ist, denen unterschiedliche Geschwindigkeiten zugeordnet sind, womit eine Anpassung an unterschiedliche Sicherheitskriterien realisierbar ist.

Der vorliegenden Erfindung liegt deshalb die Aufgabe zugrunde, das im Oberbegriff des Hauptanspruches vorausgesetzte Verfahren derart weiterzubilden, daß die von dem zu verstellenden Aggregateteil im Einklemmfall ausgeübte Kraft über kritische Bereiche des Verstellweges auf jeweils dafür vorgegebene Werte begrenzbar ist.

Erfindungsgemäß wird die Aufgabe durch die im kennzeichnenden Teil des Hauptanspruches angegebenen Maßnahmen gelöst. Vorteilhaft bei einer solchen Vorgehensweise ist, daß der gesamte Verstellbereich sehr feinfühlig hinsichtlich der Verstellgeschwindigkeit und damit bezüglich der auf eingeklemmte Objekte ausgeübten Kraft optimiert werden kann.

Besonders günstige Weiterbildungen des erfindungsgemäßen Verfahrens sind in den Unteransprüchen angegeben und werden anhand einer schematischen Darstellung eines elektrisch betriebenen, als Fensterhebesystem ausgebildeten Aggregates näher erläutert.

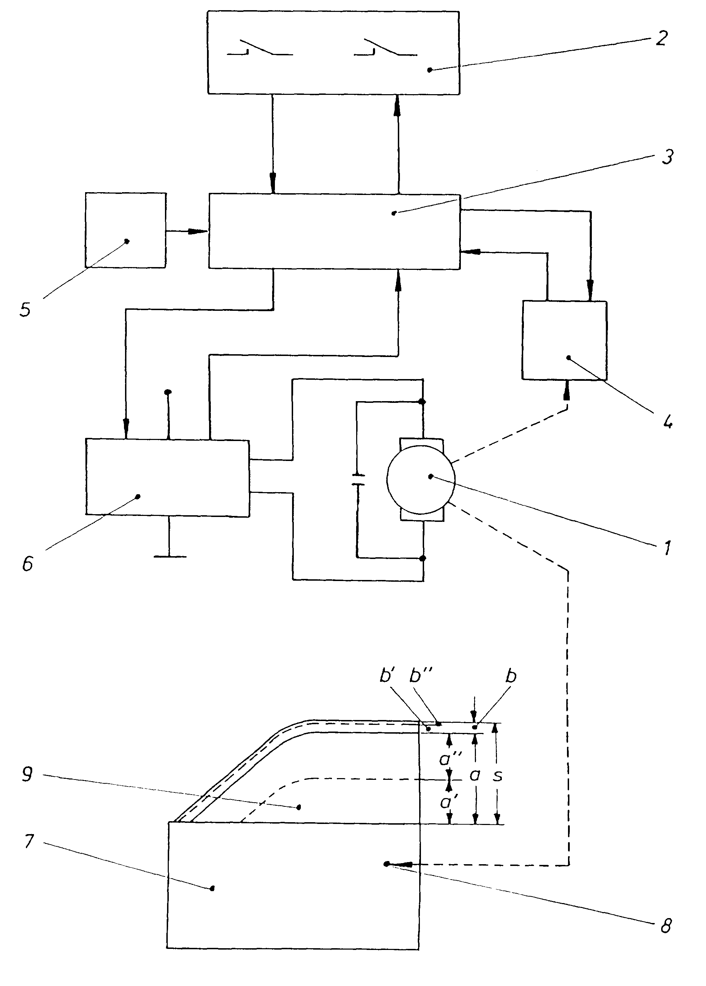

Wie aus der Zeichnung hervorgeht, wird das elektrisch betriebene Aggregat von einem in einer Kraftfahrzeugtür 7 angeordneten Fensterhebesystem repräsentiert, welches mit einem elektrischen Stellmotor 1 versehen ist, der über ein nur angedeutetes Stellorgan 8 das zu verstellende Aggregatetell 9 (Fensterscheibe) bewegt und damit das von dem zu verstellenden Aggregateteil und einem feststehenden Aggregateteil (Fensterrahmen) gebildete Aggregat (Fenster) öffnet oder schließt. Der elektrische Stellmotor 1 ist dabei über eine Leistungshalbleiter-Schaltstufe 6 an der Spannungsversorgung (Bordnetz) angeschlossen, die mit einer von einem Taktgeber 5 beeinflußten Steuerelektronik 3 verbunden ist, der einerseits Bedienelemente 2 und andrerseits eine Sensoreinrichtung 4 zugeordnet sind. Somit kann die Steuerelektronik 3 und damit der Stellmotor 1 über die Bedienelemente 2 unmittelbar und über die Sensoreinrichtung 4 mittelbar durch ursächlich mit dem Fensterhebesystem zusammenhängende Verstellparameter beeinflußt werden.

Der gesamte Verstellweg s der Fensterscheibe 9 ist in zwei Verstell-Bereiche a,b unterteilt, wovon der eine Bereich a, der von dem vollständig geöffneten bis zu einem überwiegend geschlossenen Zustand des Fensters geht, als sogenannter erster Sicherheitsbereich anzusehen ist. In diesem Verstell-Bereich a wird ausgehend von einem sogenannten ersten ggf. fortlaufend nachgebesserten Meßwert durch kontinuierliche Prüfung untersucht, ob ein aus diesem Meßwert gebildeter, statische und dynamische Größen berücksichtigender Grenzwert von nachfolgend ermittelten Meßwerten überschritten wird. Sollte dies der Fall sein, so wird über die vorzugsweise aus einem Mikrocomputer bestehende Steuerelektronik 3 eine sogenannte Gefahrenöffnung des Fensters eingeleitet, d.h. der elektrische Stellmotor 1 wird abgeschaltet und anschließend gegensinnig betrieben, so daß das Fenster wieder geöffnet wird, wobei der Offnungsweg dann frei gewählt werden kann.

Der Bereich a kann dabei in zwei Abschnitte a',a" unterteilt werden, wobei in einem vom vollständig geöffneten bis zum etwa halbgeöffneten Zustand des Fensters gehenden Abschnitt a' keine Sicherheit für den Einklemmfall in vorstehend erwähntem Sinn vorhanden ist und zwar weil in diesem Abschnitt das Einklemmen von Körperteilen mit mehr oder minder großer Wahrscheinlichkeit ausgeschlossen werden kann.
In dem Abschnitt a" wird dagegen wie vorerwähnt verfahren, das heißt im Einklemmfall erfolgt dabei eine Abschaltung des Stellmotors und gegebenenfalls eine sogenannte Gefahrenöffnung Fensters.

Beim Übergang vom Bereich a zum Bereich b wird die Leistung des Stellmotors 1 vorzugsweise durch Pulsweitenmodulation der Versorgungsspannung abgesenkt und damit die Verstellgeschwindigkeit reduziert. Dadurch wird die im System vorhandene Bewegungsenergie verringert, so daß das System bei ansonsten unveränderter Sensorik und gegebenen mechanischen Parametern auf eventuelle Einklemmkörper mit niedrigeren Kräften reagieren kann.

Natürlich kann auch dieser Bereich b wieder in zwei Abschnitte b',b" unterteilt werden, wobei in dem Abschnitt b' - in dem ein Einklemmen von Fingern noch möglich ist - die Sicherheit gewährleistet ist, während in dem Bereich b", der dem Einlauf der Fensterscheibe in die damit kooperierende Dichtungsanordnung zugeordnet ist, diese aufgrund fehlender Relevanz nicht vorhanden ist. In diesem Bereich kann ein Einklemmen von Fingern oder anderen Körperteilen nicht mehr auftreten. Es muß aber dafür gesorgt werden, daß das Fenster vollkommen geschlossen wird, womit aufgrund der beteiligten Dichtmittel ein höherer Kraftaufwand verbunden ist, der den vorerwähnten Sicherheitskriterien entgegen steht.

## Patentansprüche

1. Verfahren zur Überwachung und Steuerung des Öffnungs- und Schließvorgangs von in Kraftfahrzeugen vorhandenen elektrische betriebenen Aggregaten, Insbesondere von Fensterhebern und/oder Schiebedächern, wobei ein an die elektrische Spannungsversorgung angeschlossener, mit einem Stellorgan des Aggregates verbundener elektrischer Stellmotor unmittelbar über Bedienelemente und mittelbar über eine die ursächlich mit dem Aggregat zusammenhängenden Verstellparameter erfassende Sensoreinrichtung unter Zwischenschaltung einer Steuerelektronik beeinflußbar ist, wobei die Leistung des Stellmotors über eine Schaltstufe In Abhängigkeit von bestimmten Positionen des Aggregates zur Realisierung von jeweils darauf sich beziehenden unterschiedlichen Verstellgeschwindigkeiten des Stellorganes über dessen Verstellweg durch Änderung von zumindest einer der beiden die Leistung bestimmenden elektrischen Größen "Strom;Spannung" so veränderbar ist, daß über die im Verstellweg wirksame - ggf. auf ein eingeklemmtes Objekt zur Ausübung gelangende - Kraft entsprechend einstellbar ist, wobei der Verstellweg(s) in zumindest zwei Bereiche (a,b) unterteilt ist, wovon der erste Bereich (a) von einem zumindest teilweise geöffneten bis zu einem überwiegend geschlossenen Zustand des Aggregates und der zweite Bereich (b) von dem überwiegend geschlossenen bis zu einem zumindest nahezu vollkommen geschlossenen Zustand des Aggregates reicht und wobei die Verstellgeschwindigkeit beim Übergang vom ersten zum zweiten Bereich reduziert wird, **dadurch gekennzeichnet,** daß in beiden Bereichen (a,b) eine Begrenzung der im Einklemmfall ausgeübten Kraft vorgenommen wird und daß der Übergang vom ersten zu zweiten Bereich (a-b) in eine weniger als 25% des gesamten Verstellweges (s) ausmachende Entfernung von der vollkommen geschlossenen Stellung des Aggregates gelegt wird.

2. Verfahren nach Anspruch 1, dadurch gekennzeichnet, daß die beiden jeweils eingestellten, die Leistung bestimmenden elektrischen Größen über den zwischen zwei bestimmten Positionen liegenden Bereich bzw. Teilbereich/Abschnitt (b') des Verstellwegs (s) über die Schaltstufe (6) nicht verändert werden.

3. Verfahren nach Anspruch 2, dadurch gekennzeichnet, daß von den beiden die Leistung des Stellmotors (1) bestimmenden elektrischen Größen allein die Spannung in Abhängigkeit von bestimmten Positionen des Aggregates über die Schaltstufe (6) verändert wird und daß die jeweils eingestellte Spannung in dem zwischen zwei bestimmten Positionen liegenden Bereich bzw. Teilbereich/Abschnitt (b') des Verstellwegs (s) unverändert beibehalten wird.

4. Verfahren nach Anspruch 1, dadurch gekennzeichnet, daß der Übergang vom ersten zum zweiten Bereich (a-b) in eine etwa 25 mm ausmachende Entfernung von der vollkommen geschlossenen Stellung des Aggregates gelegt wird.

5. Verfahren nach Anspruch 4, dadurch gekennzeichnet, daß die beiden Bereiche (a,b) jeweils in einen sicherheitsrelevanten und einen nicht sicherheitsrelevanten Teilbereich/Abschnitt (a',a" und b',b") unterteilt werden.

6. Verfahren nach einem der Ansprüche 1 bis 5, dadurch gekennzeichnet, daß die Schaltstufe (6) mit Leistungshalbleiter-Bauelementen realisiert wird.

7. Verfahren nach Anspruch 6, dadurch gekennzeihnet, daß die Leistung des Stellmotors (1) durch eine von der mit Leistungshalbleiter-Bauelementen versehenen Schaltstufe (6) realisierte Pulsweitenmodulation der Versorgungsspannung des Stellmotors (1) geregelt wird.

## Claims

1. Technique for monitoring and controlling the opening and closing process of electrically driven aggregates in vehicles, in particular for window openers and/or sliding roofs, whereby an electric servomotor which is connected to the electric voltage supply is attached directly by way of operating elements to the aggregate and can be indirectly influenced by way of a sensor device which registers the regulating parameters pertaining causally to the aggregate by way of the cross connection of an electronic control unit, whereby the rating of the servomotor is adjustable by way of a regulating step in dependence on certain positions of the aggregate for the purpose of realizing various regulating speeds of the servomotor relating respectively to the same in the course of its adjustment range by changing at least one of the two electric variables "power; voltage" in such a way that the effective force in the adjustment range - which is exercised if need be upon reaching a trapped object - can be appropriately regulated whereby the adjustment range (s) is divided into at least two sectors (a,b) of which the first sector (a) ranges from an at least partially open status to a mainly closed status and on the other hand from the mainly closed status to an at least almost completely closed status of the aggregate and the second sector (b) ranges from the mainly closed to an at least almost completely closed status of the aggregate and whereby the regulating speed is reduced upon transition from the first to the second sector, **characterized by the fact that** in both sectors (a,b) a restriction of the force exercised in the case of a trapped object takes place and that the transition point from the first to the second sector (a-b) is positioned at a distance from the completely closed position of the aggregate constituting less than 25% of the total adjustment range (s).

2. Technique in accordance with claim 1, characterized by the fact that each of the two set electric variables which determine the rating by way of the regulating step (6) are not alterable beyond the sector or sub-sector/section (b') of the adjustment range (s) lying between two specific positions.

3. Technique in accordance with claim 2, characterized by the fact that of the two electric variables determining the rating of the servomotor (1), only the voltage is altered by way of the regulating step (6) in dependence on certain positions of the aggregate and that the individually set voltage in the sector or sub-sector/section (b') of the adjustment range (s) lying between two specific positions remains unaltered.

4. Technique in accordance with claim 1, characterized by the fact that the transition point from the first to the second sector (a-b) is positioned at a distance of about 25 mm from the completely closed status of the aggregate.

5. Technique in accordance with claim 4, characterized by the fact that the two sectors (a,b) are each divided into a safety-relevant and a non-safety-relevant sub-sector/section (a',a" and b',b").

6. Technique in accordance with one of claims 1 to 5, characterized by the fact that the regulating step (6) is realized with power semiconductor components.

7. Technique in accordance with claim 6, characterized by the fact that the rating of the servomotor (1) is controlled by pulse width modulation of the supply voltage of the servomotor (1) that is realized by the regulating step (6) which is equipped with power semiconductor components.

## Revendications

1. Procédé de contrôle et de commande d'opérations d'ouverture et de fermeture de systèmes à commande électrique installés dans des véhicules automobiles, notamment de lève-glaces et/ou de toits ouvrants, un servomoteur électrique branché sur l'alimentation en courant électrique et raccordé à un organe de commande du système pouvant être influencé directement par des organes de commande ou indirectement à l'aide d'un dispositif détecteur, qui capte des paramètres de réglage causaux, par l'intermédiaire d'une électronique de commande, la puissance du servomoteur électrique pouvant être modifiée à l'aide d'une plot de commutation en dépendance de certaines positions du système en vue d'obtenir des vitesses de réglage différant selon ces positions, par modification d'au moins l'une des grandeurs électriques ,,courant;tension", de sorte que la force exercée sur le parcours - et agissant, le cas échéant, sur un objet éventuellement coincé - puisse être réglée, la course de réglage (s) étant divisée, au moins, en deux zones (a, b), dont la première (a) va d'un état au moins partiellement ouvert jusqu'à un état en majeure partie fermé du système, tandis que la deuxième (b) va de l'état en majeure partie fermé jusqu'à un état au moins presque complètement fermé et la vitesse de réglage étant réduite lors du passage de la première zone à la deuxième,
caractérisé en ce que,
dans les deux zones (a, b), la force exercée est limitée en cas de coincement et que le passage de la première zone à la deuxième (a-b) est situé à une distance de la position complètement fermée du système qui correspond à moins de 25 % de la totalité du parcours de réglage (s).

2. Procédé selon la revendication 1,
caractérisé en ce que
les deux grandeurs électriques respectivement réglées et déterminant la puissance ne sont pas modifiées par le plot de commutation (6) dans la zone ou le secteur (b') du parcours de réglage (s) entre deux position définies.

3. Procédé selon la revendication 2,
caractérisé en ce que
des deux grandeurs électriques déterminant la puissance du servomoteur (1), seule la tension peut être modifiée par l'intermédiaire du plot de commutation (6) en fonctionnement des positions du systèmes et que
la tension respectivement réglée demeure inchangée dans la zone ou le secteur (b') du parcours de réglage (s) situé/e entre deux positions définies.

4. Procédé selon la revendication 1,
caractérisé en ce que
le passage de la première zone à la deuxième (a-b) est situé à une distance d'environ 25 mm de la position complètement fermée du système.

5. Procédé selon la rvendication 4,
caractérisé en ce que
les deux zones (a, b) sont divisées chacune en une zone partielle/un secteur à sécurisation impérative (a', a") et en une zone partielle/un secteur à sécurisation facultative (b', b").

6. Procédé selon l'une des revendications 1 à 5,
caractérisé en ce que
le plot de commutation (6) est réalisé avec des éléments de construction à semi-conducteurs de puissance.

7. Procédé selon la revendication 6,
caractérisé en ce que
la puissance du servomoteur (1) est réglée par une modulation d'impulsions en largeur de la tension d'alimentation du servomoteur (1) qui est réalisée à l'aide d'un plot de commutation (6) pourvu d'éléments de construction à semiconducteurs de puissance.
